(19)

**Europäisches Patentamt**
**European Patent Office**
**Office européen des brevets**

(11) **EP 4 564 840 A1**

(12) **EUROPEAN PATENT APPLICATION**

(43) Date of publication:
04.06.2025 Bulletin 2025/23

(21) Application number: 23213534.3

(22) Date of filing: 30.11.2023

(51) International Patent Classification (IPC):
H04N 23/71 $^{(2023.01)}$  H04N 23/74 $^{(2023.01)}$

(52) Cooperative Patent Classification (CPC):
H04N 23/74; H04N 23/71

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Rovco Limited
Bristol BS1 6BX (GB)

(72) Inventors:
• LESLIE, Benjamin James
Bristol BS1 6BX (GB)
• BATCHELOR, Peter
Bristol BS1 6BX (GB)
• CROTTY, Amber
Bristol BS1 6BX (GB)

(74) Representative: Latham, Stuart Alexander
Withers & Rogers LLP
2 London Bridge
London SE1 9RA (GB)

(54) **SURVEYING SYSTEM**

(57) A surveying system for capturing digital images in an environment, the system comprising: a digital camera (20) and a light array (19), the camera and light array being arranged to be mounted on a mobile device (10) with a known spatial relationship with respect to one another, the camera having a field of view defining an imaging space within the harsh environment, the light array comprising one or a plurality of independently operable light elements orientated to illuminate different portions of the imaging space; a memory device having stored in it a look up table which associates regions of an image taken by the camera with elements of the light array which are orientated to be capable of illuminating the regions; and a data processor communicatively coupled to the camera and light array and memory device, and configured to: evaluate an illumination metric of pixels corresponding to a region of interest within an image; and based on the evaluation of the illumination metric, provide a light control signal to the light array to individually modulate elements of the light array based on the look up table to improve visibility of the region of interest to the camera.

FIG. 3a

FIG. 3b

EP 4 564 840 A1

**Description**

Background

When surveying a subsea site, asset, environment, or any other harsh environment facility it is typical to use a mobile survey device such as a robot or remotely operated vehicle. For brevity, such facilities will be referred to as a survey site and such survey devices will be referred to as a mobile device, such as a mobile robotic vehicle.

Lighting systems on underwater remotely operable vehicles (ROVs) tend to be integrated with the vehicle controller and designed for human control. Some systems include a pan/tilt mechanism that adjusts the lighting direction when the camera pan/tilt unit is used. A similar arrangement is often to be found on unmanned aerial vehicles (UAVs) or unmanned ground vehicles (UGVs).

Human operators have limited attention when performing the complex task of piloting a mobile robotic vehicle, and so are not able to optimally tune the lighting for best imaging performance - particularly in environments with backscatter effects and reflective particles. Environmental conditions in the air, such as dust, smoke or fog, can also cause backscatter effects.

In addition, where an Autonomous Underwater Vehicle (AUV) is used for surveying, human supervision cannot be relied upon for control of lighting systems. Existing AUVs therefore rely heavily on sonar sensors, which limits availability of high-resolution data while navigating in complex environments.

The present inventors have devised a new lighting control system and method which can enable efficient camera-based surveying in real-time.

Summary

Underwater imaging relies heavily on discrete lighting as there is a lack of ambient light at subsea depth. The subsea depth can be any depth, as light begins to be absorbed as soon as it enters the water; or the survey equipment could be imaging something in the shade, such as the underneath of an overhanging piece of equipment. For example, in clear tropical water only about 1 percent of visible light - mostly in the blue range - penetrates to 100 m. It may be much worse in turbid conditions. Controlling discrete lighting for optimal imaging is challenging because water is an interacting medium for light, with backscatter reducing image clarity if too much artificial lighting is used and capture of images and video of scenes with high dynamic range is more difficult. In addition, other environments exist where poor lighting hinders suitable assessment by survey equipment. A subterranean environment is one such example that requires artificial lighting and can frequently have light-interacting particles in the air causing backscatter. Closed loop control of lighting is therefore needed as a key component when deploying mobile robotic vehicles with visual imaging systems as poor lighting would render any visual data significantly less valuable.

By way of a non-limiting overview, embodiments of the invention relate to a system which includes a combination of hardware and software elements. In its minimal form, the hardware system may consist of a camera and controllable lights, both attached to a computer. All the hardware elements can be inside pressure vessels to withstand underwater working conditions. The software element may comprise an image processing module that uses semantic understanding of the scene to evaluate the illumination, and a control process that may modulate the lights to improve the illumination. For example, a PID controller could be used to modulate the output of the lighting system - reducing output when metrics indicate the semantic region of interest (ROI) is overexposed. The lights for the system can be steerable. One instantiation could consist of one or more arrays of individually controllable lighting elements (e.g. LEDs). The lighting elements in an array can be arranged such that their normal vectors are not parallel.

A calibration procedure (which may be a one-time calibration procedure) in a low-light environment would establish correlations between the illumination of the camera pixels and the modulation of individual lighting elements. Using this correlation map, the lighting elements that will not illuminate the ROI, as indicated by the semantic scene understanding, can be modulated down to reduce unnecessary backscatter and blowout.

Thus, the system can enable the following advantages:

- Capture high quality data by ensuring the illumination of the scene meets quantitative criteria. By introducing a scene understanding component, the system can adjust lighting to prioritise capturing detail in the most important parts of the image.
- The system can be used on autonomous vehicles where human intervention for lighting control is impossible.
- The system can control multiple lighting variables without adding additional cognitive load to the robotic vehicle operator.

In accordance with a first aspect of the invention, there is provided a surveying system. The surveying system can be arranged to be or suitable for surveying in an environment. The environment may optionally be a harsh environment, such as a subsea environment. The surveying system for capturing digital images in an environment comprises:

> a digital camera and a light array, the camera and light array being arranged to be mounted on a mobile device with a known spatial relationship with respect to one another,

>> the camera having a field of view defining an imaging space within the environment,
>> the light array comprising one or more independently operable light elements orientated to illuminate different portions of the imaging space;

> a memory device having stored in it a look up table which associates regions of an image taken by the camera with elements of the light array which are orientated to be capable of illuminating the regions; and
> a data processor communicatively coupled to the camera and light array and memory device, and configured to:

>> evaluate an illumination metric of pixels corresponding to a region of interest within an image; and
>> based on the evaluation of the illumination metric, provide a light control signal to the light array to individually modulate elements of the light array based on the look up table to improve visibility of the region of interest to the camera.

Thus, the surveying system according to the first aspect of the invention includes a closed loop lighting control that can automatically adjusts lighting to produce optimal conditions for its imaging system. Unlike existing systems, the imaging and lighting hardware are integrated.

The data processor can be configured to select the region of interest within the image.

The data processor can be configured to repeat the evaluation and light control steps in a PID loop to change one or more of: the location or direction; the wavelength; or the intensity or brightness of light emitted from the light array.

The surveying system can further comprise a range sensor, wherein the look up table defines a relationship between a three-dimensional voxel grid corresponding with the imaging space and elements of the light array which are orientated to be capable of illuminating each voxel.

The range sensor can be a further camera forming a stereoscopic pair with the camera.

The light elements can each have an illumination axis and some or all of the light elements are mounted with non-parallel illumination axes.

The light elements can comprise LEDs.

The surveying system can further comprise a mobile device, wherein the digital camera and light array are mounted on the mobile device with a known spatial relationship with respect to one another.

The data processor and/or memory device can be mounted on the mobile device. The digital camera and light array may be mounted in one or more casings to protect the digital camera and light array from the environment. The data processor and/or memory device being mounted in one or more casings to protect the data processor and/or memory device from the environment.

The mobile device can comprise an ROV or AUV and the, or each, casing is a watertight pressure vessel.

The system can also comprise a Simultaneous Localisation and Mapping (SLAM) algorithm based on received data from a camera and/or a range sensor and pose data. Each of the camera and/or range sensor may have a pose with respect to a mobile device. The pose is the combination of position and orientation of the respective camera, range sensor, and/or mobile device, in the environment. The SLAM algorithm can use images to generate the pose data. Alternatively, or in combination, a pose sensor can comprise one or more other sensors such as a gyroscope or accelerometer to aid in the generation of pose data.

The 3D survey data can comprise a 3D model component generated by a 3D reconstruction algorithm. Thus, the mobile device operator does not need to be an expert in the object or site being surveyed in order to know how to use the mobile device to inspect it.

The mobile device can comprise a remotely operable or autonomous mobile platform such as an underwater remotely operable vehicle (ROV), an autonomous underwater vehicle (AUV), an unmanned air vehicle (UAV), an unmanned ground vehicle (UGV), an unmanned underwater vehicle (UUV), an autonomous surface vehicle (ASV), space probes, or satellites.

In one example, the mobile device can comprise a remotely operable or autonomous vehicle including a propulsion system, a steering system and a command controller arranged to control the propulsion system and the steering system in accordance with command signals provided from a control station which is remote with respect to the vehicle, or the data processor. Optionally, the remotely operable or autonomous vehicle is a subsea remotely operable or autonomous vehicle.

The mobile device can further comprise steering and propulsion modules communicatively coupled to the data processor, the data processor being configured to run a navigation algorithm for controlling steering and propulsion of the mobile device. Thus, the navigation algorithm can control where the mobile device moves in the survey site. Advantageously, the mobile device can be controlled to compensate for mobile device drift and also make navigational choices enabling the most efficient or quickest route to develop the most suitable model for a particular survey, trading off detail and speed.

The navigation algorithm can be configured to control steering and propulsion of the mobile device in accordance with control commands received from the remote server via the first data transceiver. Advantageously, the remote server can notify the navigation algorithm to amend the navigation if corrections or further investigations are required. The survey expert could also notify the navigation algorithm to amend navigation if they desired. Thus, the navigation algorithm can make a choice to amend navigation. Alternatively, control commands received from the remote server can override the navigation algorithm.

The optional casing can be a pressure vessel (such as a watertight pressure vessel) configured to withstand pressure differentials between its exterior and interior or filled with a pressure compensating gas or fluid; enabling the camera module to be continuously used in harsh underwater environments, such as in at least two metres of water, or at least five metres of water, or in at least 10 metres of water, at least 20 metres of water, at least 40 metres of water or at least 100 metres of water. In other embodiments the casing can be configured to enable the camera module to be continuously used in other harsh environments such as in a vacuum.

The data transceiver can comprise a wireless base station, a wired data link, or any other type of transceiver known in the art. Alternatively, the data transceiver can comprise a separate transmitter and receiver. The data transceiver can be full duplex or half duplex. If the data transceiver is wireless, it can comprise one or more antennas capable of operating at similar or different frequencies.

Aspects of the invention can be applied to communications between autonomous survey vehicles when working together to co-operatively survey a hazardous survey site. Thus, the system can comprise a plurality of mobile devices according to the first aspect each incrementally sending processed data to a server and/or each (some or all) of the plurality of mobile devices. The plurality of mobile devices can alternatively send model parameters etc. to enable the plurality of mobile devices to co-operatively survey the site. The plurality of mobile devices can run identical or different 3D reconstruction algorithms. The server can receive processed data from all mobile devices to develop a server side 3D model and visualisations. The server can also transmit updates generated by algorithms on the server.

In accordance with a second aspect of the invention, there is provided a method of surveying an environment using a surveying system of any preceding aspect, the method comprising:

evaluate an illumination metric of pixels corresponding to a region of interest within an image; and
based on the evaluation of the illumination metric, providing a light control signal to the light array to individually modulate elements of the light array based on the look up table to improve visibility of the region of interest to the camera.

The method can further comprise repeating the evaluation and light control steps in a PID loop to change one or more of: the location or direction; the wavelength; or the intensity or brightness of light emitted from the light array in order to minimise an error value.

Optional features of the first aspect can be applied to the second aspect in an analogous manner.

Brief Description of the Drawings

Figure 1 is a diagram of a mobile device according to an embodiment of the invention;

Figure 2 is a perspective diagram of a camera module of the mobile device of Figure 1;

Figures 3a is an isometric view of a camera and of its field of view as a voxelised frustum defining an imaging space.

Figures 3b is a top view of the system of Figure 3a with the addition of a light array.

Figure 4 illustrates a method of capturing images and adjusting light elements of the light array.

Figure 5 shows an image of a pipe with a characteristic feature and a damage feature of the pipe.

<u>Detailed Description</u>

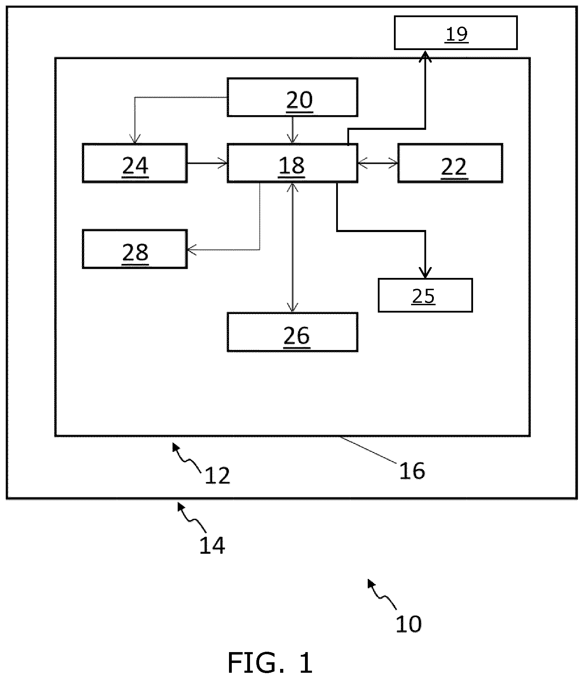

Referring to Figure 1, a mobile device for surveying harsh environments according to an embodiment of the invention is shown generally at 10. The mobile device 10 is arranged for deployment into harsh environments, such as continuous use underwater beyond two metres, subsea, or in the vacuum of space, and can comprise a Remotely Operated Vehicle (ROV), Autonomous Vehicle (AV) such as an Autonomous Underwater Vehicle (AUV), robotic platform or the like.

Harsh environments place stringent requirements on a camera module, such as mechanical stresses, radiative stresses, chemical reactions and temperature exposure. Mechanical stresses can include pressure, shock, vibration, and coefficient of thermal expansion (CTE) mismatches. Radiative stresses can include cosmic rays, and magnetic influences from electromagnetism. Chemicals such as salt water, moisture, fuel and noxious gases can react with such a camera module. Temperatures below -40°C and/or above 125°C can also be experienced in a harsh environment.

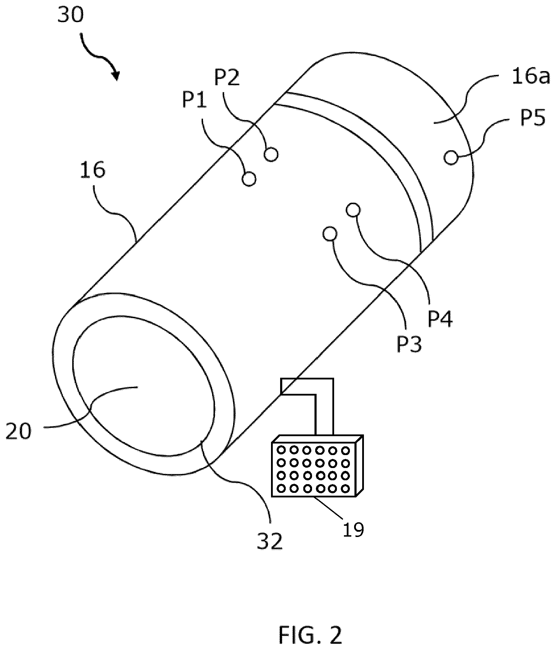

The mobile device 10 comprises a computing device 12 mounted on a remotely operable or autonomous vehicle 14, such as a mobile robotic vehicle. As described in more detail below with reference to Figure 2, the computing device 10 is housed within a protective casing 16 to enable it to work in a harsh environment such as subsea.

The mobile device 10 comprises a light array 19. The light array 19 can be coupled to the outside or inside of the protective casing 16 and/or can be mounted to the remotely operable or autonomous vehicle 14 (e.g., in their own protective casing or without). The light array 19 may comprise a plurality of independently operable light elements orientated to illuminate different portions of an imaging space of a camera 20. The light array 19 may comprise an array of light elements (e.g., LEDs) arranged at different angles with respect to each other. The light array 19 may enable modulation of individual light element's power within the light array 19 to allow the lighting to be directed at different portions of the imaging space.

The computing device 12 comprises a data processor 18 communicatively coupled to the camera 20 to receive images from the camera 20. The camera 20 has a field of view defining an imaging space within the survey site. The camera 20 is a digital camera and can capture high-definition images or video. The camera 20 may have an internal processor inside to perform tasks such as setting camera parameters and synchronisation to attached systems. The data processor 18 can be connected to the camera 20 via a high-bandwidth, low-latency link.

The digital camera 20 and light array 19 can be mounted on the mobile device 10 (e.g., to the body of the casing 16) with a known spatial relationship with respect to one another. The data processor 18 may perform a calibration process which maps the light elements of the light array 19 to an imaging space of a camera 20 since the camera 20 and the light array 19 have known spatial relationship, this may result in a light map.

The data processor 18 can be coupled to the light array 19 to provide control signals, via a wired or wireless data link.

The data processor 18 can be coupled to other devices such as network interfaces (not shown) and volatile and non-volatile memory 22. The memory 22 can store images, video, a light map (which associates regions of an image taken by the digital camera with elements of the light array which are orientated to be capable of illuminating the regions), or metadata, as well as algorithms. The data processor 18 can be suitable for computationally complex image processing and computer vision algorithms. For example, the data processor can comprise processing cores including (but not requiring) GPU cores and embedded processing for video codecs or AI operations, such as an Nvidia Tegra (TM) system on a chip (SoC). The data processor 18 can comprise one or more communicatively coupled cores and/or distinct processors i.e. can be a distributed system.

The data processor 18 is configured to analyse the contents of the images or video produced by the camera 20. The data processor 18 allows regions of interest (ROIs) to be automatically identified, and the illumination of those ROIs to be evaluated. The processor 18 provides control signals to the light array 19 based on the evaluation of the illumination of the ROI.

The mobile device can be autonomous, e.g., an AUV. In an AUV, the data processor 18 can be configured to execute a 3D reconstruction algorithm to develop a 3D model. To generate a 3D model from video or camera images, the 3D reconstruction algorithm can take key points that for example make up the edges of the object in an image and associates the key points with corresponding key points from other images, such as earlier captured images or images captured concurrently by other cameras. Knowing the camera pose associated with each image, rays can be projected from the camera positions through the key points of each image and points where the rays for a particular point intersect or are best fit in 3D space represent the 3D location of the corresponding points in the 3D model. The 3D reconstruction algorithm can be Structure from Motion or any other appropriate technique that generates a 3D model from video or camera images. The 3D model can for example comprise a point cloud. The 3D reconstruction algorithm can either start building the 3D model from a pair of images, or can use the image to augment a 3D model already being constructed by the data processor.

Optional range sensor 25, such as a multibeam echosounder (MBES), or a stereoscopic camera arrangement comprising camera 20 and an additional camera. The range sensor 25 generates range data which can be used to identify how far features are from the range sensor 25. The range sensor 25 may have a known spatial arrangement/relationship with respect of the camera 20. For example, this spatial arrangement/relationship can be predetermined or calculated. Data from the range sensor 25 can be used to create or add to a 3D model generated by a 3D reconstruction algorithm.

To create an accurate 3D model the 3D reconstruction algorithm requires multiple input images. Put another way, to model a 3D object, multiple images at different angles around the object help to build up a more reliable 3D model of the object. If two images are taken sequentially and the camera 20 has a high capture rate then the two images are likely to be very similar and the latter image received will add little information over the previous image. "Key frames" can be defined by the degree of difference between two unique views of an object. The 3D reconstruction algorithm can be arranged to compare a received new image with the preceding image (or an earlier image) to determine the degree of difference. The new image can contain the object from a different view point with respect to the preceding image due to movement of the object and/or camera 20. Once a difference threshold has been exceeded the received image is marked as a key frame. In other embodiments key frames can be identified by a data processor other than the data processor 18 and/or other means such as waiting a fixed time between key frames, e.g. 1 second or selecting every nth frame. Alternatively, an inertial measurement unit can be used to determine the camera position has moved enough to initiate a key frame.

The data processor 18 may provide synchronisation of visual SLAM data and range data (such as MBES scans from acoustic sensors, or via stereoscopic camera arrangements). This allows for building, in real-time, a single, common, combined and optimised 3D reconstruction comprised of measurements taken by both visual and range sensors. Moreover, for resource constrained computer systems such as those used in harsh environments such as underwater, subsea, etc. the system design allows efficient use of available processing power. When data is recorded (SLAM model, key frames, range data, and sensor extrinsics) a 3D model can be computed by applying the appropriate transformations based on the 1-to-1 correspondence from SLAM to range data and the known sensor geometric relationship.

The 3D reconstruction algorithm typically processes all of the input images (i.e. the camera 20 output dictates the processing power of the data processor 18) and chooses key frames to add points that fit well with the model under construction. Points from the key frames are joined to form a point cloud that can be processed into mesh and rendered as a solid object with computer graphics. Every time a key frame is added, the camera view is typically a unique view on the model. Unique views are ideally suited for input to object detection algorithms, as a full set of key frames can provide all the views of an object necessary to create a complete model of the object. An object detection algorithm can be run on the mobile device 10 or remotely, for example on a server. Thus, the mobile device 10 runs the 3D reconstruction algorithm to generate 3D survey data such as a point cloud or identification of a key frame based on images captured by the camera 20.

The computing device 12 may further comprise a pose sensor 24 arranged to determine pose data representing a pose of the mobile device. The pose is the combination of position and orientation of the mobile device in the environment. In the illustrated embodiment the pose sensor 24 comprises a Simultaneous Localisation and Mapping (SLAM) module (which can run on the data processor 18) which uses images from the camera to determine the pose based on features in the images. In addition, the key frames and pose data can be used to generate a visual SLAM map. Alternatively or in combination, the pose sensor can comprise other sensors such as a gyroscope or accelerometer to aid in the generation of pose data.

The mobile device may carry a sensor suite on-board. The rigidly attached sensors comprise at least a camera system 20 and a light array 19. The vehicle can be tasked with surveying a subsea region or asset.

The computing device 12 further comprises a data transceiver 26, which can for example comprise a wireless base station. The data processor 18 is configured to incrementally transmit data and pose data to a server (not shown) via the data transceiver 26. The transmitted data can be 3D survey data, low resolution images processed from the corresponding input images, or comprise key frames which can be of original resolution or processed to reduce the resolution. The data transmitted can be a combination of live data and post processed data. Depending on the requirements of the project and available data link quality, it can be possible to only send small amounts of data in either direction. The data processor 18 can be arranged to process the 3D survey data using cryptographic keys prior to transmission. Advantageously, this encodes the 3D survey data making the data more secure/confidential. The survey mobile device and the server can for example exchange cryptographic keys before the mobile device 10 is deployed to the hazardous area so that all survey data communications can be secure.

The computing device 12 of the illustrated embodiment further comprises an optional steering and propulsion module 28 arranged to control navigation of the vehicle 14. In such embodiments, any suitable software interface can be provided to interface with on-board steering and propulsion systems of the vehicle.

In an AUV, the 3D survey data can be processed by the data processor 18 and used to operate the AUV using the steering and propulsion module 28 to undergo a survey.

Referring now to Figure 2, the computing device of the illustrated embodiment may comprise a camera module 30 for imaging in harsh environments. The camera module 30 may comprise the casing 16 that defines a watertight housing having an interior space. One end of the casing 16 may include a transparent window or lens 32. The camera 20 is mounted within the interior space and arranged to capture images of the exterior environment through the window 32. The interior space of the casing 16 can be accessed by removing a casing end cap 16a which is removably coupled to a body of the casing 16 via an o-ring sealed flange. A seal can be provided between the casing end cap 16a and the body of the casing to inhibit water ingress. The casing 16 of this embodiment is formed from stainless steel and is cylindrical in shape so as to be structurally resistant to high pressures which can be experienced by the camera module 30 in an underwater harsh environment such as deep underwater environment and/or a subsea oil and gas infrastructure site. In other embodiments the material and/or shape of the casing 16 can be changed depending on the deployment environment, e.g. aluminium, copper beryllium, titanium, plastic, ionomers, PEKK, carbon fibre or ceramics in order to provide stress, chemical and/or temperature resistance. It is preferred that the material and shape of the casing 16 results in a strong and rigid structure. The shape of the casing 16 can be any pressure resistive shape such as a prism or cylinder. The camera 20 can form part of the casing 16 such that the casing 16 forms a fluid seal with at least part of the camera 20, e.g. the lens of the camera 20. Other end cap seals can be formed using methods including through-bolts or a threaded tube. Some or all of the components of the computing device 12 and the lighting array 19 can be housed within the casing 16. Ports P1-P5 can be provided for wired connections to other camera modules, computing devices or the like to provide external data links while the camera module is operating in a harsh environment such as subsea.

In any embodiment, some or all of the components of the computing device can be contained within one or more respective casings each defining a sealed interior space for isolating the components from the subsea or other harsh environment, as described in WO2020094498A1 for example.

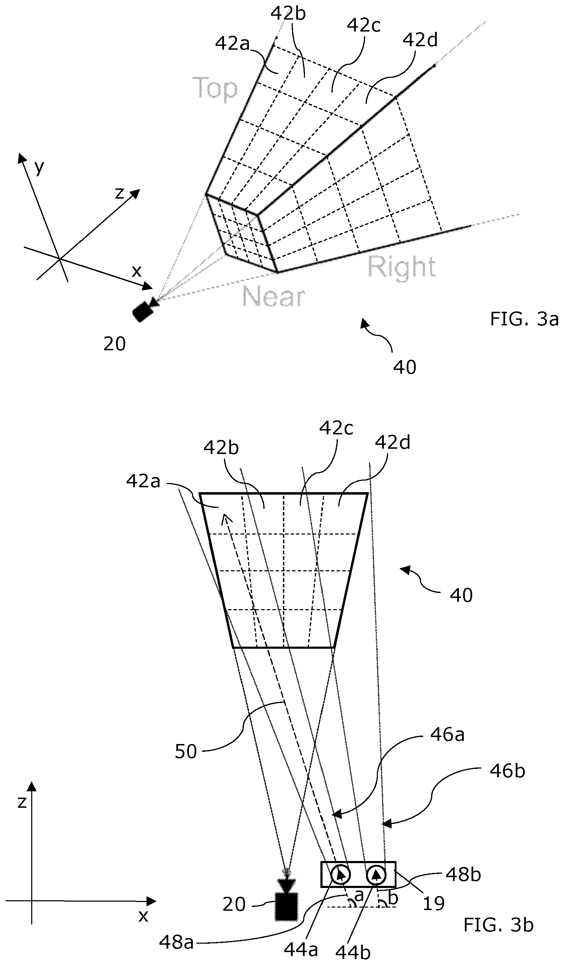

Figure 3a shows the camera 20 and a 3D representation of its field of view 40 defining an imaging space within a harsh environment. Figure 3b shows a top-down view of the Figure 3a. Once the lighting element's location is known, the camera frustum is voxelised up to a maximum working distance such as 2m, 5m, 10m, or 15m (greater distances may be more suitable for non-subsea environments). As shown in Figure 3a, the field of view 40 can be represented by a voxelised frustum. The field of view 40 is segmented into a set of 64 voxels, e.g., 42a-42d, although the field of view can be segmented into any number of voxels depending on the desired resolution. Similar to how a pixel represents a value on a (typically) regular grid in a two-dimensional screen, a voxel represents a value on a (typically) regular grid in three-dimensional space.

Figure 3b also shows a light array 19 with two LEDs 44a, 44b shown. Each LED 44a, 44b, produces a respective light beam 46a, 46b. Each light element may emit light, and a light beam may represent 68%, or 95% of the light emitted from a respective light element. Light elements can be directional, such that a light beam can be focused as a narrow light beam. Narrow light beams (for the same total illuminance from a light element) can be beneficial because they penetrate further and are less susceptible to problematic/undesirable backscatter than broader light beams.

It can be seen in Figure 3b that light beams 46a, 46b illuminate different voxels to varying degrees. For example, light beam 46a illuminates voxel 42a and a part of voxel 42b, and light beam 46b illuminates voxel 42d and a part of voxel 42c. Therefore, there is a relationship between the illumination of a voxel and the light elements of the light array 19.

Diversity of light beam angles can reduce problematic/undesirable backscatter effects in subsea environments. Therefore, light elements of the light array 19 can be mounted such that light elements are orientated in a variety of axes. As shown in Figure 3b, LED 44a is angled at $a^0$ (degrees), and LED 44b is angled at $b^0$, where a is different to b. Thus, in Figure 3b it is shown that light beams 46a, 46b diverge. Although, the light beams may converge and cross. The light beams 46a, 46b are shown in Figure 3b to vary in angle in the x-z plane, however, to further increase light diversity light elements can be arranged such that their respective light beams may also vary in one or more 3D axis x, y, z.

A light map stored on memory 22 associates regions of the imaging space (e.g., an image taken by the digital camera 20) with elements of the light array which are orientated to be capable of illuminating the regions. The light map can be used to project the light elements into the voxelised frustum space, such that each voxel will contain a list of the light elements that illuminate that voxel. That is, the light map records the relationships between voxels of an imaging space (e.g., the voxelised frustum) and the light elements of the light array 19. For example, each voxel may assign a weight to each light element corresponding to the contribution of the respective light element. For example, for a voxel K, the weight of a light element can be estimated as:

$$m/V_z \qquad\qquad (1)$$

Where m is the cosine of the angle between the lighting element's normal vector (e.g., 48a, 48b) and a light ray passing through the voxel $K$, and $V_z$ is the number of voxels which the light ray passed through to reach the voxel K from the light element. For example, the weight of light element 44a to voxel 42a is ¼ because the light elements normal vector 48a is equal to the ray 50 (therefore m = 1), and the light ray 50 passes through 4 voxels to reach voxel K.

Each lighting element's normal vector (e.g., 48a, 48b) can be defined as an illumination axis. Therefore, some or all of the light elements are mounted on the light array 19 with non-parallel illumination axes.

The light map can be known to the surveying system prior to the deployment of the mobile device. The light map can be determined as part of a one-off calibration process if the pose of the camera 20 and the light array 19 are known and unchanged. The light map can be recalculated if the relative pose between the camera 20 and the light array 19 (or light elements of the light array) change, or a transformation can be added to the light map to compensate for the change. One such procedure for developing a light map is described in Pistellato, M et al (2022), "A Light Source Calibration Technique for Multi-Camera Inspection Devices", Proceedings of the 11th International Conference on Pattern Recognition Applications and Methods - ICPRAM, SciTePress, pages 488-494, DOI 10.5220/0010995900003122.

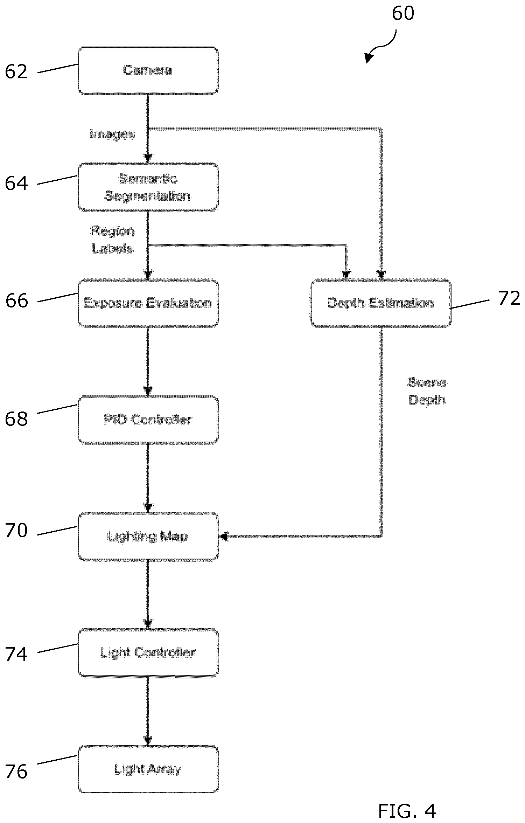

Figure 4 illustrates a method of capturing images according to an embodiment of the invention generally at 60.

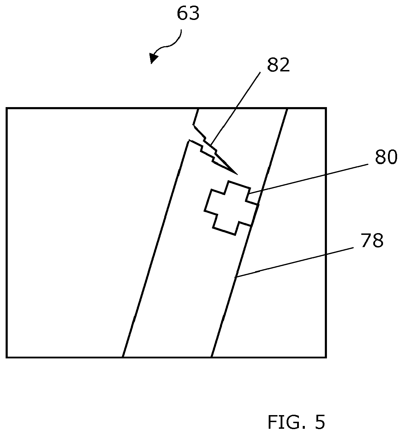

At step 62, the digital camera 20 having a field of view defining an imaging space within the harsh environment is configured to capture image data, e.g., an image, a series of images, or a video. The image data can be used by SLAM algorithms, to generate a 3D reconstruction, and/or for navigation purposes. An example of an image 63 is shown in Figure 5. Figure 5 shows an image of a pipe 78 with a characteristic feature 80 of the pipe 78, and a damage feature 82 of the pipe 78.

At step 64, processing of the image data (e.g., by the data processor 18) occurs to identify/select a ROI within an image of the image data. The identification of the ROIs can be performed manually or with artificial neural networks for image segmentation, such as Mask-RCNN. The image processing software may run at or near the camera frame rate to allow the system to adapt to changing lighting conditions, and/or to identify Key Frames. The data processor 18 can send control signals to the lighting system in order to improve the illumination of ROIs. If an image segmentation algorithm is used then the output can be labels of objects or regions within the survey site. These semantic labels can be used at step 66, and/or at step 72 if range data is available. In addition, semantic labels can be used by SLAM algorithms, to generate a 3D reconstruction, and/or for navigation purposes. Figure 5 shows an example image whereby the processing of the image data occurs to identify a ROI, such as the pipe 78 (and/or the characteristic feature 80, and/or the damage feature 82).

At step 66, following the selection of a ROI within a digital image, an evaluation of an illumination metric of pixels within the image corresponding to the ROI occurs. The illumination metric can be illuminance: the metric that is used to measure the light intensity within a space. Illuminance is measured in footcandles or lux - it is the amount of light (lumens) falling on a surface (over any given square foot or square meter). One method of evaluating the illumination metric would be to look at the proportion of high-illuminance pixels (i.e., pixels at or near saturation) inside the ROI and compare this to the proportion outside the ROI. This evaluation can be part of a light control algorithm (e.g., a PID control loop), for example, the evaluation can be used to determine an error value which the light control algorithm seeks to reduce. The data processor can be configured to repeat the evaluation and light control steps in a PID loop to change one or more of: the location or direction; the wavelength; or the intensity or brightness of light emitted from the light array.

At step 68, the light control algorithm can be used to provide a light control signal to the light array 19 to individually modulate elements of the light array 19 to improve visibility of the ROI to the camera 20, e.g., to maintain an optimum illumination range which may be achieved using the illumination metric. For example, this could reduce overexposure of objects/regions of interest when imaged against a dark background - a common scenario in deep water inspection. Depending on the content of the image, contrast can be simply a proxy for understanding how well an object/region of interest is illuminated. If the data processor 18 can estimate scene range, such as in the case of a stereo camera system, this additional range data can be used to inform lighting modulation by using a different set of PID parameters for different average scene ranges, and so reach an improved quality lighting condition more quickly. For example, PID saturation values could be set higher when the average scene range is higher.

At step 70, if the additional range data is provided then the light map allows a ROI identified by the segmentation algorithm to be projected into the voxelised frustum, and quickly look-up which light elements of the light array 19 will illuminate the ROI. As described previously, the list of light elements for each voxel can contain weights approximating the amount of illumination each lighting element contributes to that voxel. For example, a look up table may define a relationship between a three-dimensional voxel grid corresponding with the imaging space and elements of the light array 19 which are orientated to be capable of illuminating each voxel. If no additional range data is provided, then a 2D light map may still be used based on an estimated or predetermined range between the camera and an object in the survey site.

At optional step 72, the range sensor 25 is provided to determine an estimate of the range between the camera 20 and the segmented objects of interest / ROI in the survey site. The range sensor 25 provides additional range data which may also be used by SLAM algorithms, to generate a 3D reconstruction, and/or for navigation purposes.

At step 74, the data processor 18 comprising the light control algorithm generates a light control signal to the light array 19 to individually modulate elements of the light array 19 to improve visibility of the ROI to the camera 20, and to improve the usability of the ROI to the data processor 18 when developing a 3D model and/or navigating. The light control algorithm can be based on the evaluation of the illumination metric and/or the light map.

At step 76, the light array 19 is operated by the light control signal to illuminate the ROI and the survey site. Optionally, the method of capturing images according to an embodiment of the invention shown generally at 60 is repeated iteratively as a whole or part (e.g., repeat the steps of evaluating an illumination metric of pixels corresponding to a ROI within an image; and based on the evaluation of the illumination metric, provide a light control signal to the light array 19 to individually modulate elements of the light array based on the look up table to improve visibility of the ROI to the camera) to optimally tune the lighting from the light array 19 for improved imaging performance. The method of capturing images according to an embodiment of the invention shown generally at 60 can be repeated more if a Key Frame is identified to ensure that optimum lighting conditions are applied to improve feature data extracted from the Key Frame for use in the optional 3D reconstruction algorithm.

The ROI in any example can be a large object or collection of objects which are in the foreground of an image, such as a pipe 78, or can be specific subsections of an object or collection of objects, such as the characteristic feature 80 and/or the damage feature 82 of the pipe 78. In general, the ROI may include non-continuous regions. the ROI may include non-binary membership, for example, some regions may be determined to be high priority, some regions may be determined to be medium priority, and some regions may be determined to be low priority (this may depend on the ROI algorithm used).

Mobile devices, systems, and methods according to embodiments of the invention can be utilised in the field of offshore and subsea survey but can also apply to any survey system for hazardous environments such as space, nuclear, mining, etc. The survey can be performed either autonomously, semi autonomously, manually via remote control, or manually using a minimal size crew in order to reduce the risk. Sending crews to hazardous locations involves the inconvenience of taking safety precautions and therefore increases the cost. The mobile device can, for example, be a ROV or AUV.

It is described that the data processor 18 can be configured to repeat the evaluation and light control steps (66, 68, 70, 74) in a PID control loop to change the intensity of each light element in the light array 19. However, it will be apparent that in any embodiment the data processor 18 can also be configured to repeat the evaluation and light control steps in a PID loop to change one or more of: the location or direction; the wavelength; or the intensity or brightness of light emitted from the light array 19. For example, the wavelength can be changed by varying the illumination intensity between a Red, Green, and/or Blue light element. The light elements and/or the light array 19 for the system can be steerable and controllable in accordance with the method of Figure 4. For example, some or all of the light elements may be arranged in different directions (as described above). Alternatively, or in addition, some or all light elements may be coupled to a steering means. Alternatively, or in addition, some or all light elements may be associated with a respective optical element (such as a lens array on top of a respective light elements). The optical element may be configured to direct the light from the respective light element and arranged to steer the illumination in different directions.

In an embodiment, the light array may comprise a plurality of independently operable light elements. Alternatively, the light array may comprise only a single steerable lighting element. The lighting element may be steerable via a mechanical, optical, or opto-mechanical means.

In any embodiment the data processor 18 and/or memory device 22 can be mounted on the mobile device 10, the data processor 18 and/or memory device 22 being mounted in one or more casings 16 to protect the data processor 18 and/or memory device 22 from the harsh environment.

In any embodiment the system described herein can use a range sensor to provide range data to utilise a 3D voxel light map. Alternatively, if no range sensor is present, then some benefits of the system described herein may still be apparent and the light map may just map light elements to a 2D pixel plane.

In any embodiment the data processor and/or memory can be remote from the mobile device such that images are transmitted from the mobile device 10, and light control signals can be received by the mobile device 10.

In any embodiment the camera can alternatively be supplemented by any device that can image an area i.e. an imaging device. Thus, the imaging device can be one or more cameras, sonar equipment, or laser scanning equipment, or alternatively a combination of said camera, sonar equipment, and/or laser scanning equipment.

Embodiments of the invention extend to a surveying system as described above which is arranged to be mounted on a mobile device.

Although the invention has been described above with reference to one or more preferred embodiments, it will be appreciated that various changes or modifications can be made without departing from the scope of the invention as defined in the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage.

**Claims**

1. A surveying system for capturing digital images in an environment, the system comprising:

a digital camera and a light array, the camera and light array being arranged to be mounted on a mobile device with a known spatial relationship with respect to one another,

the camera having a field of view defining an imaging space within the environment,
the light array comprising one or more independently operable light elements orientated to illuminate different portions of the imaging space;

a memory device having stored in it a look up table which associates regions of an image taken by the camera with elements of the light array which are orientated to be capable of illuminating the regions; and

a data processor communicatively coupled to the camera and light array and memory device, and configured to:

evaluate an illumination metric of pixels corresponding to a region of interest within an image; and

based on the evaluation of the illumination metric, provide a light control signal to the light array to individually modulate elements of the light array based on the look up table to improve visibility of the region of interest to the camera.

2. The surveying system according to claim 1, wherein the data processor is configured to select the region of interest within the image.

3. The surveying system according to any preceding claim, wherein the data processor is configured to repeat the evaluation and light control steps in a PID loop to change one or more of: the location or direction; the wavelength; or the intensity or brightness of light emitted from the light array.

4. The surveying system according to any preceding claim, further comprising a range sensor, wherein the look up table defines a relationship between a three-dimensional voxel grid corresponding with the imaging space and elements of the light array which are orientated to be capable of illuminating each voxel.

5. The surveying system according to claim 4, wherein range sensor is a further camera forming a stereoscopic pair with the camera.

6. The surveying system according to any preceding claim, wherein the light elements each have an illumination axis and some or all of the light elements are mounted with non-parallel illumination axes.

7. The surveying system according to any preceding claim, wherein the light elements are LEDs.

8. The surveying system according to any preceding claim, further comprising a mobile device, wherein the digital camera and light array are mounted on the mobile device with a known spatial relationship with respect to one another.

9. The surveying system according to claim 8, wherein the data processor and/or memory device are mounted on the mobile device, wherein the digital camera and light array are mounted in one or more casings to protect the digital camera and light array from the environment, the data processor and/or memory device being mounted in one or more casings to protect the data processor and/or memory device from the environment.

10. The surveying system according to any preceding claim, wherein the mobile device comprises an ROV or AUV and the, or each, casing is a watertight pressure vessel.

11. A method of surveying an environment using a surveying system of any preceding claim, the method comprising:

evaluate an illumination metric of pixels corresponding to a region of interest within an image; and

based on the evaluation of the illumination metric, providing a light control signal to the light array to individually modulate elements of the light array based on the look up table to improve visibility of the region of interest to the camera.

12. The method of claim 11, further comprising repeating the evaluation and light control steps in a PID loop to change one or more of: the location or direction; the wavelength; or the intensity or brightness of light emitted from the light array in order to minimise an error value.

FIG. 1

FIG. 2

FIG. 3a

FIG. 3b

60

62 — Camera

Images

64 — Semantic Segmentation

Region Labels

66 — Exposure Evaluation

Depth Estimation — 72

68 — PID Controller

Scene Depth

70 — Lighting Map

74 — Light Controller

76 — Light Array

FIG. 4

FIG. 5

Europäisches
Patentamt

European
Patent Office

Office européen
des brevets

# EUROPEAN SEARCH REPORT

**Application Number**

EP 23 21 3534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 405 836 B1 (LUMILEDS LLC [US]) 11 August 2021 (2021-08-11) | 1,2,4,5, 7-11 | INV. H04N23/71 |
| Y | * paragraph [0011] - paragraph [0025] * * paragraph [0036] - paragraph [0065] * * figures 7-18 * | 3,6,12 | H04N23/74 |
| Y | US 2016/205735 A1 (HEIMES FELIX O [US]) 14 July 2016 (2016-07-14) * paragraph [0054] * | 3,12 | |
| Y | EP 1 742 462 A1 (KONINKL PHILIPS ELECTRONICS NV [NL]; LUMILEDS LIGHTING LLC [US]) 10 January 2007 (2007-01-10) * paragraph [0029] * * figures 5,6 * | 6 | |
| A | US 8 761 594 B1 (GROSS KEVIN A [US] ET AL) 24 June 2014 (2014-06-24) * column 1, line 60 - column 2, line 50 * * figures 2,4 * | 1-12 | |
| A | KR 2016 0080730 A (KYUNGPOOK NAT UNIV IND ACAD [KR]) 8 July 2016 (2016-07-08) * paragraph [0082] - paragraph [0086] * * figures 6a-6b * | 1,11 | **TECHNICAL FIELDS SEARCHED (IPC)**<br><br>H04N |

The present search report has been drawn up for all claims

| Place of search | Date of completion of the search | Examiner |
|---|---|---|
| The Hague | 6 May 2024 | Didierlaurent, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 3534

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | | Publication date | Patent family member(s) | | Publication date |
|---|---|---|---|---|---|
| EP 3405836 | B1 | 11-08-2021 | CN | 108604042 A | 28-09-2018 |
| | | | CN | 113495403 A | 12-10-2021 |
| | | | EP | 3405836 A1 | 28-11-2018 |
| | | | JP | 6821686 B2 | 27-01-2021 |
| | | | JP | 2019505069 A | 21-02-2019 |
| | | | KR | 20180103134 A | 18-09-2018 |
| | | | TW | 201733336 A | 16-09-2017 |
| | | | US | 2019025672 A1 | 24-01-2019 |
| | | | US | 2021200064 A1 | 01-07-2021 |
| | | | WO | 2017125280 A1 | 27-07-2017 |
| US 2016205735 | A1 | 14-07-2016 | US | 2016205735 A1 | 14-07-2016 |
| | | | WO | 2015195187 A1 | 23-12-2015 |
| EP 1742462 | A1 | 10-01-2007 | CN | 101213831 A | 02-07-2008 |
| | | | EP | 1742462 A1 | 10-01-2007 |
| | | | EP | 1905228 A1 | 02-04-2008 |
| | | | JP | 5053270 B2 | 17-10-2012 |
| | | | JP | 2009500937 A | 08-01-2009 |
| | | | KR | 20080034453 A | 21-04-2008 |
| | | | TW | 200719077 A | 16-05-2007 |
| | | | US | 2008218618 A1 | 11-09-2008 |
| | | | WO | 2007007222 A1 | 18-01-2007 |
| US 8761594 | B1 | 24-06-2014 | NONE | | |
| KR 20160080730 | A | 08-07-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020094498 A1

**Non-patent literature cited in the description**

- A Light Source Calibration Technique for Multi-Camera Inspection Devices. **PISTELLATO, M et al.** Proceedings of the 11th International Conference on Pattern Recognition Applications and Methods. SciTePress, 2022, 488-494